Europäisches Patentamt

European Patent Office

Office européen des brevets

(19)

(11) Publication number: **0 032 305**
**B1**

(12) **EUROPEAN PATENT SPECIFICATION**

(45) Date of publication of patent specification: **21.03.84**

(51) Int. Cl.³: **G 03 B 27/62**

(21) Application number: **80304652.3**

(22) Date of filing: **19.12.80**

(54) A document cover supporting mechanism for a copying apparatus.

(30) Priority: **21.12.79 JP 167022/79**

(43) Date of publication of application:
**22.07.81 Bulletin 81/29**

(45) Publication of the grant of the patent:
**21.03.84 Bulletin 84/12**

(84) Designated Contracting States:
**DE FR GB IT NL**

(56) References cited:
**GB - A - 1 318 753**
**GB - A - 1 355 878**
**US - A - 2 248 646**
**US - A - 3 095 225**
**US - A - 4 124 296**

(73) Proprietor: **MITA INDUSTRIAL CO. LTD.**
**2-28, 1-chome, Tamatsukuri Higashi-ku**
**Osaka (JP)**

(72) Inventor: **Kimura, Hiroshi**
**24-33 Ikeda-Asahimachi**
**Neyagawa-shi Osaka (JP)**
Inventor: **Hisajima, Masahiko**
**Olive Heights Aikawa 1-107 1-1 Aikawa-cho 1-chome**
**Higashiyodogawa-ku Osaka (JP)**
Inventor: **Shigemura, Yutaka**
**8-14-103, Takatsukasa 1-chome Takarazuka-shi Hyogo-ken (JP)**
Inventor: **Irie, Yoichiro**
**29-3, Aoyamadai 4-chome**
**Suita-shi Osaka (JP)**

(74) Representative: **Williams, Trevor John et al,**
**J.A. KEMP & CO. 14 South Square Gray's Inn**
**London WC1R 5EU (GB)**

Courier Press, Leamington Spa, England.

### A document cover supporting mechanism for a copying apparatus

The present invention relates to a supporting mechanism of a document cover to be used for a copying apparatus, and more especially to a supporting mechanism capable of holding the document cover in its raised position to allow the replacement of an original document to be copied on a transparent glass plate of the copying apparatus.

In a conventional typical document copying. apparatus, the replacement of an original document on a transparent glass plate is carried out by the operator using one hand while holding a document cover raised above the plate surface using the other hand. Therefore the action of raising and lowering the document cover lid while at the same time changing the document is very complicated. With larger copying apparatus the document cover becomes heavier making it more difficult to maintain the document cover lid in its fully raised position with one hand while replacing the document to be copied.

It has been proposed in British Patent Specification No. 1,318,753 to provide a document cover supporting mechanism for a copying apparatus which comprises a first mounting member to be attached to the apparatus housing, a second mounting member to support the document cover, the mounting members being relatively pivotable about a horizontal axis to permit the cover to be swung between the horizontal copying position and a raised position, and means for holding the document cover alternatively in open and closed positions and including spring means operable to urge the cover towards its fully open position. In this structure two separate spring mechanisms are required. One is used to provide a bias urging the cover to its open position and the other is a spring provided with a sliding cam arrangement which overrides the action of the first spring to provide a force to close the cover to its horizontal copying position once it has been lowered against the action of the first spring sufficiently close to the horizontal. This mechanism is quite complicated in that two interrelated springs are required with a carefully angled camming arrangement from one of the springs operable to overcome the cover opening spring. The present invention provides a more simple and rugged construction in which only one spring is required to provide both functions of holding the cover closed or holding it open as required. There is no need for a complicated reversely operating cam mechanism as provided by the plunger and recess structure of the British specification above referred to.

The present invention is characterised in that the holding means comprises a positioning member mounted on one of the mounting members and having a cylindrical frictional surface convex about an axis parallel with a horizontal axis and a contact member carried by the other of the mounting members and having a second frictional surface part-cylindrically convex about a horizontal axis parallel with said axes, and means resiliently biasing the contact member in a direction constantly to urge the second frictional surface against the first frictional surface, the positioning member and the contact member are so relatively positioned that the position of contact between the first frictional surface and the second frictional surface is beneath the level of the centre of the frictional surface of that one of the positioning and contact members which is mounted on the first mounting member when the document cover is in a horizontal closed position, and that during movement of the cover from its horizontal closed position to its raised position the contact position between the frictional surfaces passes to a position such that the biasing means causes a force resisting closure of the document cover, and in that means are provided for adjusting the spring force of the biasing means.

With this arrangement a single biasing means illustrated as a spring is all that is required to provide a reliable force to urge the cover into its horizontal closed position when copying is taking place and to hold the cover in its open position when it is required to change an original to be copied. Because of this single spring acting in two opposite ways the cover can be made to have a relatively light structure since there is no reliance upon gravity to hold it in its closed position as there is in some other prior art structure where a spring is used to hold the cover in an open position with the closed position depending solely upon the weight of the cover. Reliance upon the weight only of the cover is not reliable since the operator does not have that feel of a positive action taking place to urge the cover home to its closed position as happens with the arrangement of the present invention when the biasing means is operating to cause the frictional surfaces to engage and pivot the cover downwardly into its fully closed position. Furthermore with the present structure using a single spring means it is a straightforward matter to provide adjusting means by which the spring tension can readily be adjusted to an individual machine such that it will carry out both its closing and holding open functions in an ideal and carefully balanced way with the minimum of inconvenience to an operator.

The invention will be further described, by way of example, with reference to the accompanying drawings, wherein:

Figure 1 is an overall perspective view of a copying apparatus embodying the invention;

Figure 2 is an enlarged perspective view showing the document cover lid of the apparatus;

Figure 3 is an enlarged perspective detail view showing the base portion of a supporting rod of the lid, with parts broken away;

Figure 4 is a cross sectional view of the base of the supporting rod when the document cover lid is in a closed position;

Figure 5 is a cross sectional view similar to that of Figure 4 but when the document cover lid is in its fully raised position; and

Figure 6 is a cross sectional view similar to those of Figures 4 and 5 but with the document cover partly raised.

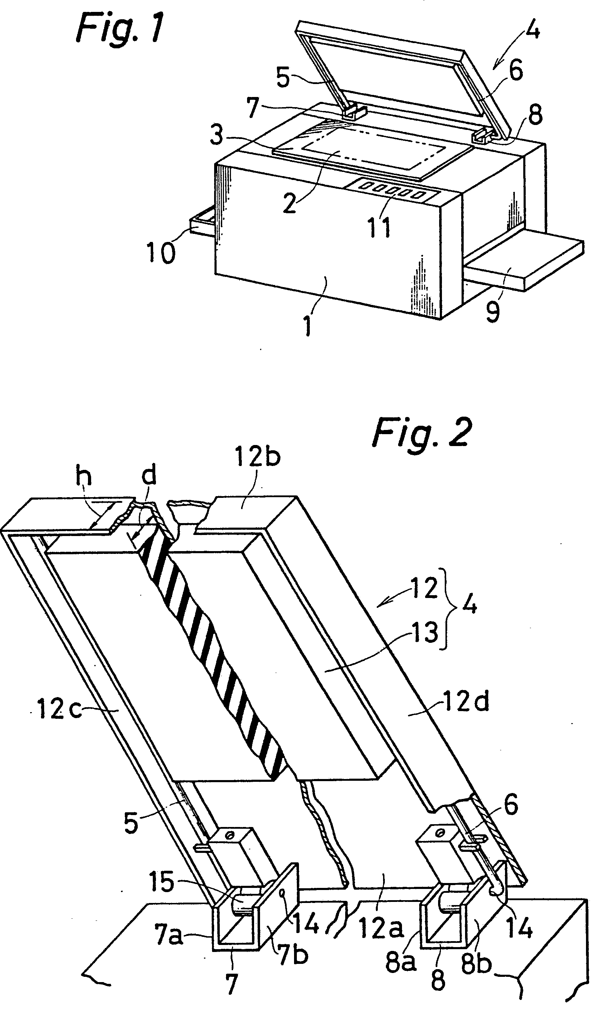

Figure 1 is an overall perspective view of an electrostatic copying apparatus which comprises an optical means (not shown) which is scanned horizontally in the lateral direction (right and left direction in Figure 1) of an apparatus housing 1 for projecting an image of an original document 2, shown by phantom lines, through a slit onto a moving photoconductive surface. A transparent glass plate 3 is mounted on the top surface of a housing 1 to support the original document 2 with part of the aforementioned movable optical means being mounted beneath the transparent glass plate 3. The original document 2 on the transparent glass plate 3 is covered during copying with a document cover lid 4 supported by supporting rods 5 and 6. The bases of the supporting rods 5 and 6 are pivotally mounted by means of hinge members 7 and 8 fixed on the rear side of the housing 1. Accordingly the front or rear side of the document cover lid 4, as viewed by the operator, can be pivotally raised above the transparent glass plate 3 as shown in Figure 1. A feeding cassette 9 loaded with copy papers is detachably mounted to one end wall of the apparatus housing 1, and a copy collection tray 10 is mounted to the other end wall so as to receive copy papers to be reproduced. Operating controls 11 are located on the upper front portion of the housing 1.

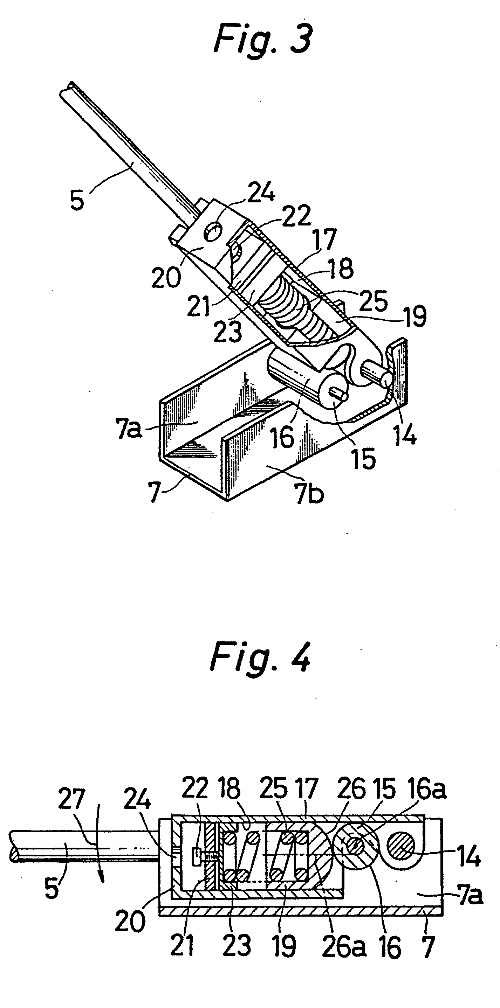

Figure 2 is an enlarged perspective view in the vicinity of the document cover lid 4, and Figure 3 is an enlarged perspective view in the vicinity of the base of the supporting rod 5, with parts broken away, showing further details of its construction. The document cover lid 4 comprises a frame 12 of rigid material and a retaining pad 13 manufactured of an elastic material, for example polyurethane, which is adhered to the underside of the rigid frame 12 facing the transparent glass plate 3. The rigid frame 12 comprises a rectangular flat portion 12*a* and three vertical walls 12*b*, 12*c* and 12*d* which are located about the front and two side edges of the flat portion 12*a* so as to leave the hinge members 7 and 8 at the rear of the lid exposed. The depth "d" of the retaining pad 13 is greater than the height "h" of each wall 12*b*, 12*c* and 12*d*. Therefore, when the document cover lid 4 is pivoted downward to cover the original document 2 on the transparent glass plate 3, the retaining pad 13 holds the original document 2 flat against the top surface of the glass plate 3.

The hinge members 7 and 8 are each formed in an upwardly open U-shape. A horizontal supporting shaft 14 is pivotally mounted through supporting portions 7*a* and 7*b*, 8*a* and 8*b*. Supporting rods 5 and 6 extend along the insides of walls 12*c* and 12*d*, and are fixedly mounted to the rigid frame 12. The bases of the supporting rods 5 and 6 extend at right angles from and are fixed to the supporting shaft 14. Either a single shaft 14 can be provided passing through both hinges 7 and 8 or a separate short supporting shaft 14 may be provided for each hinge.

Figure 4 shows the base of the supporting rod 5 when the document cover lid 4 is in a closed position. A cylindrical positioning member 15, having its axis parallel to that of the supporting shaft 14, is fixed to the hinge member 7. The peripheral surface of the positioning member 15 can be considered as a first frictional surface 16.

A guide member 17 is fixedly mounted to the base of the supporting rod 5. The guide member 17 is formed internally as a guide tube 18 extending parallel with the axis of the supporting rod 5. A contact member 19 to be in contact with the positioning member 15 is inserted in one end of the guide tube 18 facing the supporting shaft 14, and an end plate 20 closes the other end of the guide tube. A supporting plate 21, provided with an adjustment screw 22, is attached adjacent to the end plate 20 in the guide hole 18. A movable receiving plate 23 is adjustably disposed between the supporting plate 21 and the contact member 19 so as to be in contact with the adjustment screw 22 and in alignment with the guide tube 18. The end plate 20 has a hole 24 to permit passage therethrough of a screwdriver for turning the adjustment screw 22 when required. A spring 25 is provided between the receiving plate 23 and the contact member 19. Accordingly the contact member 19 is resiliently urged toward the supporting shaft 14 by the spring 25 with the spring force being adjustable by rotation of the adjustment screw 22.

The contact member 19 has a semi-cylindrical end face which constitutes a second frictional surface 26 convex about an axis which is parallel with the axis 16a of the positioning member 15. The positioning member 15 is so placed that the second frictional surface 26 of the contact member 19 is always urged into contact with the first frictional surface 16 by the action of the spring 25. When the document cover lid 4 is in a closed position as shown in Fig. 4, the positioning member 15 is so located that the centre line 26a of the second frictional surface 26 extending lengthwise of the guide tube 18 is lower than the axis 16a of the first frictional surface 16. Therefore, when the document cover lid 4 is closed, the first frictional surface 16 contacts with the second frictional surface 26 at a position which is lower than the axis 16*a* of the positioning member 15. This causes a moment indicated by array 27, to be exerted by the positioning member 15 on the guide member 17 and the supporting rod 5 about the supporting shaft 14 in a downward direction caused by the bias of the spring 25. Thus when the document cover lid 4 contacts the plate surface, the original document 2 can be held firmly on the transparent glass plate 3.

The base of the supporting rod 6 has the same construction as that of the supporting rod 5.

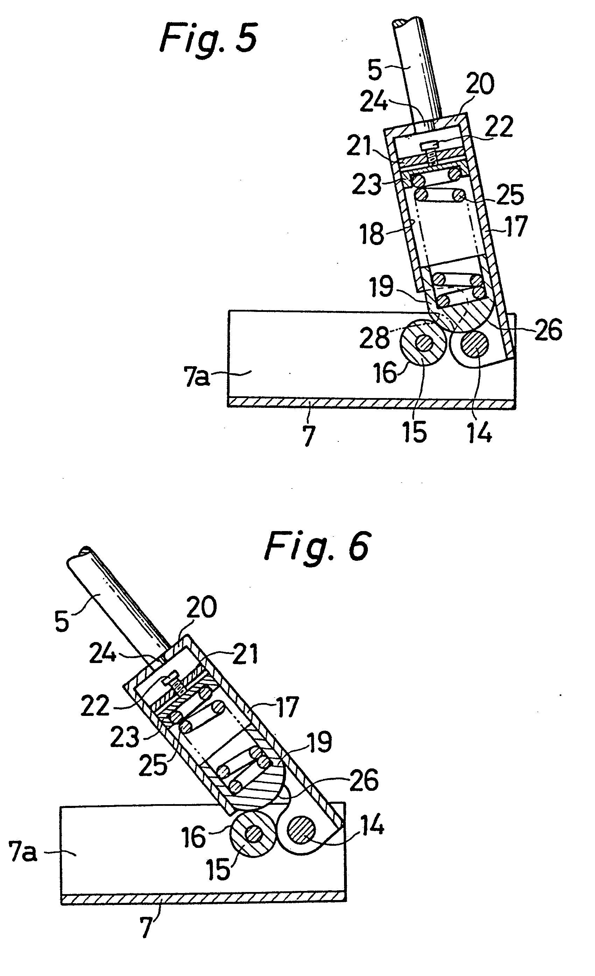

Referring to Fig. 5, when the document cover lid 4 is in its fully raised position, the contact member 19 contacts both the supporting shaft 14 and the positioning member 15. In this condition, since the contact member 19 is pushed by a force of the spring 25, the frictional force exerted between the first frictional surface 16 and the second frictional surface 26 is larger than the force tending to close the document cover lid 4 produced by the weight of the lid. Therefore, even when the document cover lid 4 is released by the operator the lid remains in its raised position as shown in Fig. 5. A recessed surface portion 28 (as shown by phantom line) may be formed in the second position of surface 26 at the contact positions between the positioning member 15 and the contact member 19 when the lid is fully raised. The positioning member 15 can then engage with the recess 28 so as safely to ensure that the document cover lid 4 will remain in its raised position unsupported by the operator.

Referring to Fig. 6, when the document cover lid 4 is slightly closed from its fully raised position the contact member 19 is in contact with the positioning member 15. However the force exerted by the spring 25 is so determined that the frictional force between the first frictional surface 16 and the second frictional surface 26 is sufficiently large to resist closing of the document cover lid 4 under the motion of its own weight. Adjusting the adjustable screw 22 through the hole 24 with the driver allows spring tension to be so adjusted that the document cover lid 4 can be raised and sufficiently supported in the desired position as to allow the rapid replacement of an original document on the transparent glass plate 3.

Clearly the arrangement illustrated and described above may be arranged in an inverse manner with the positioning member 15 being provided on and finally secured to the supporting rods 5 and 6 and with the guide member 17, the spring 25 and the contact member 19 being mounted on the hinge members 7 and 8.

## Claims

1. A document cover supporting mechanism for a copying apparatus which comprises a first mounting member (7) to be attached in the apparatus housing (1), a second mounting member (5) to support the document cover (4), the mounting members being relatively pivotable about a horizontal axis (14) to permit the cover to be swung between a horizontal copying position and a raised position, and means (25, 15, 19) for holding the document cover alternatively in open and closed positions and including spring means (25) operable to urge the cover towards its fully open position, characterised in that said holding means comprises a positioning member (15) mounted on one of the mounting members and having a cylindrical frictional surface (16) convex about an axis parallel with the horizontal axis (14) and a contact member (19) carried by the other of the mounting members and having a second frictional surface (26) part-cylindrically convex about a horizontal axis parallel with said axes, and means (25) resiliently biasing the contact member (19) in a direction constantly to urge the second frictional surface (26) against the first frictional surface (16), the positioning member (15) and the contact member (19) are so relatively positioned that the position of contact between the first frictional surface (16) and the second frictional surface (26) is beneath the level of the centre of the frictional surface of that one of the positioning and contact members which is mounted on the first mounting member when the document cover is in a horizontal closed position, and that during movement of the cover (4) from its horizontal closed position to its raised position the contact position between the frictional surfaces passes to a position such that biasing means (25) causes a force resisting closure of the document cover, and in that means (22) are provided for adjusting the spring force of the biasing means (25).

2. A mechanism as claimed in claim 1, characterised in that a recess (28) is provided in said second frictional surface (26) in a position to be engaged by the first frictional surface (16) when the document cover (4) is fully raised.

3. A mechanism as claimed in claim 1 or 2, characterised in that the contact member (19) is slidably mounted in a guide tube (18) mounted on the support member.

4. A mechanism as claimed in claim 1, 2 or 3, characterised in that the second mounting member (5) comprises a rod portion (14) extending along said first horizontal axis, said second frictional surface being engageable with said rod portion when the cover is fully open.

## Patentansprüche

1. Abstützmechanik für die Vorlagenabdeckung eines Kopiergeräts, mit einem ersten, an dem Gerätegehäuse (1) anzubringenden Befestigungselement (7), einem zweiten Befestigungselement (5) zur Abstützung der Vorlagenabdeckung (4), wobei die Befestigungselemente um eine Horizontalachse (14) relativ zueinander schwenkbar sind, um eine Verschwenkung der Vorlagenabdeckung zwischen einer horizontalen Kopierstellung und einer angehobenen Stellung zu gestatten, und mit einer Haltevorrichtung (25, 15, 19) zum wahlweisen Halten der Vorlagenabdeckung in geöffneter oder geschlossener Stellung, die eine Federung (25) beinhaltet, welche einen Zwang auf die Vorlagenabdeckung in Richtung auf die voll geöffnete Stellung ausüben kann, dadurch gekennzeichnet, daß die Haltevorrichtung ein an einem der Befestigungselemente angeordnetes Positionierglied (15) mit einer zylindrischen Reibfläche (16), die bezüglich einer zu der Horizontalachse (14) parallelen Achse konvex ist, ein Kontaktglied (19), welches von dem anderen Befestigungselement gehalten ist und eine zweite, teilzylindrische und bezüglich einer zu den genannten Achsen parallelen Horizontalachse konvexe Reibfläche (26) hat, sowie eine Spannvorrichtung (25) beinhaltet, die das Kontaktglied (19) elastisch in einer Richtung beaufschlagt, um die zweite Reibfläche (26) gegen die erste Reibfläche (16) zu drücken, daß das Positionierglied (15) und das Kontaktglied (19) relativ zueinander so angeordnet sind, daß die Kontaktstelle zwischen der ersten (16) und der zweiten (26) Reibfläche unterhalb der Mittelpunktsebene der Reibfläche desjenigen Gliedes (16 oder 19) liegt, das an dem ersten Befestigungselement angeordnet ist, wenn die Vorlagenabdeckung sich in der horizontalen geschlossenen Stellung befindet, daß während der Bewegung der Vorlagenabdeckung (4) aus ihrer horizontalen geschlossenen Stellung in ihre angehobene Stellung die Kontaktstelle zwischen den Reibflächen an eine Stelle gelangt, in der die Spannvorrichtung (25) eine der Schließung der Vorlagenabdeckung widerstehende Kraft bewirkt, und daß zur Einstellung der Federkraft der Spannvorrichtung (25) eine Stellvorrichtung (22) vorgesehen ist.

2. Abstützmechanik nach Anspruch 1, dadurch gekennzeichnet, daß in der zweiten Reibfläche (26) an einer Stelle, die von der ersten Reibfläche (16) bei voll angehobener Vorlagenabdeckung (4) erfasst wird, eine Ausnehmung (28) vorgesehen ist.

3. Abstützmechanik nach Anspruch 1 oder 2, dadurch gekennzeichnet, daß das Kontaktglied (19) in einem an dem Befestigungselement zur Abstützung der Vorlagenabdeckung befestigten Führungsrohr (18) verschiebbar angeordnet ist.

4. Abstützmechanik nach Anspruch 1, 2 oder 3, dadurch gekennzeichnet, daß das zweite Befestigungselement (5) einen Stangenteil (14) aufweist, der sich längs der ersten Horizontalachse erstreckt, wobei die zweite Reibfläche in Eingriff mit dem Stangenteil bringbar ist, sobald die Vorlagenabdeckung voll geöffnet ist.

**Revendications**

1. Mécanisme-support d'un couvercle de document dans un appareil à copier qui comporte un premier élément de montage (7) fixé sur le carter de l'appareil (1), un deuxième élément de montage (5) supportant le couvercle de document (4), les éléments de montage pouvant pivoter relativement autour d'un axe horizontal (14) pour permettre de basculer le couvercle entre une position de copiage horizontale et une position relevée, et dans moyens (25, 15, 19) pour maintenir le couvercle de document alternativement en position ouverte et en position fermée et comportant des moyens de ressorts (25) pouvant être actionnés pour ramener le couvercle vers sa position complètement ouverte, caractérisé en ce que ces moyens de retenue comportent un élément de positionnement (15) monté sur l'un des éléments de montage et avant une surface de friction cylindrique (16) convexe autour d'un axe parallèle à l'axe horizontal (14), et un élément de contact (19) porté par l'autre des éléments de montage et ayant une deuxième surface de friction (26) partiellement cylindrique et convexe autour d'un axe horizontal parallèle aux axes précités, et des moyens (25) rappelant élastiquement l'élément de contact (19) dans une direction pour appliquer constamment la deuxième surface de friction (26) contre la première surface de friction (16), en ce que l'élément de positionnement (15) et l'élément de contact (19) sont positionnés l'un par rapport à l'autre de telle sorte que la position de contact entre la première surface de friction (16) et la deuxième surface de friction (26) se trouve en dessous du niveau du centre de la surface de friction de celui des éléments de positionnement et de contact qui est monté sur le premier élément de montage lorsque le couvercle de document est en position fermée horizontale, en ce que, lors du déplacement du couvercle (4) de sa position fermée horizontale à sa position relevée, la position de contact entre les surfaces de friction passe dans une position telle que les moyens de rappel (25) créent une force s'opposant à la fermeture du couvercle de document, et en ce que des moyens (22) sont prévus pour régler la force du ressort des moyens de rappel (25).

2. Mécanisme selon la revendication 1, caractérisé en ce qu'un évidement 28 est prévu dans la deuxième surface de friction (26) dans une position lui permettant de coopérer avec la première surface de friction (16) lorsque le couvercle de document (4) est complètement relevé.

3. Mécanisme selon la revendication 1 ou la revendication 2, caractérisé en ce que l'élément de contact (19) est monté à coulissement dans un tube de guidage (18) monté sur l'élément-support.

4. Mécanisme selon l'une quelconque des revendications 1, 2 ou 3, caractérisé en ce que le deuxième élément de montage (5) comporte une portion de tige (14) s'étendant selon le premier axe horizontal, la deuxième surface de friction pouvant coopérer avec cette portion de tige lorsque le couvercle est complètement ouvert.

*Fig. 1*

*Fig. 2*

## Fig. 3

## Fig. 4

*Fig. 5*

*Fig. 6*